# EUROPEAN PATENT APPLICATION

(11) **EP 3 418 256 A1**
(43) Date of publication of application: **26.12.2018**
(21) Application number: 17753079.7
(22) Date of filing: 09.02.2017
(51) Int. Cl.: C01B 33/18

(54) **MANUFACTURING METHOD FOR CORE-SHELL-TYPE POROUS SILICA PARTICLE**

(30) Priority: 19.02.2016 JP 2016030260
(71) Applicant: Tohoku University, Sendai-shi, Miyagi 980-8577 (JP); Daicel Corporation, Osaka-shi, Osaka 530-0011 (JP)
(72) Inventor: KONNO, Mikio, Sendai-shi Miyagi 980-8577 (JP); NAGAO, Daisuke, Sendai-shi Miyagi 980-8577 (JP); ISHII, Haruyuki, Sendai-shi Miyagi 980-8577 (JP); KANNO, Arata, Sendai-shi Miyagi 980-8577 (JP); HASHIMOTO, Yuri, Sendai-shi Miyagi 980-8577 (JP)
(74) Representative: Grünecker Patent- und Rechtsanwälte PartG mbB
(86) International application number: PCT/JP2017/004811
(87) International publication number: WO 2017/141821

(57) **Abstract**

Provided is a method for manufacturing core-shell-type porous silica particles, the method including: a preparation step for preparing an aqueous solution containing non-porous silica particles, a cationic surfactant, a basic catalyst, a hydrophobic part-containing additive, and an alcohol; a shell precursor formation step for adding a silica source to the aqueous solution to form a shell precursor on the surfaces of the non-porous silica particles; and a shell formation step for removing the hydrophobic part-containing additive and the cationic surfactant from the shell precursor to form a porous shell.

## Description

### TECHNICAL FIELD

The present invention relates to a method for manufacturing core-shell-type porous silica particles.

### BACKGROUND ART

Porous materials such as porous silica are widely used as adsorbents and catalysts due to having large specific surface areas, and it is expected that the scope of use will increase if such porous materials are formed as particles. For example, mesoporous silica particles (MSP) having pore diameter of approximately 2 to 50 nm can be used for drug delivery when the particle diameter is 100 nm, and can be used as fillers for liquid chromatography columns when the particles are micron-size. In such cases, it is necessary for the particle size to be as uniform as possible, that is, for the particles to be a monodispersed system. Furthermore, in cases where porous silica is used as a filler for a liquid chromatography column, it is necessary for the porous silica to have low flow resistance and high separation efficiency.

In order to reduce the flow resistance, the particle diameter of the porous silica should be increased. However, by increasing the particle diameter of the porous silica, separation efficiency decreases because it takes time for substances to be separated, which are adsorbed by the porous silica and reach the central part of the porous silica, to be released from the porous silica. Meanwhile, if the particle diameter of the porous silica is reduced in order to increase the separation efficiency, flow resistance increases.

In order to achieve both low flow resistance (pressure loss reduction) and high separation efficiency, consideration has been given to use of core-shell-type silica in which the surfaces of non-porous silica core particles are covered with a shell comprising porous silica. This core-shell-type silica has a non-porous silica core particle at the central part, therefore, substances to be separated that have been adsorbed by the core-shell-type silica remain in the shell close to the surface of the core-shell-type silica. Therefore, the time between the substances to be separated being adsorbed by the core-shell-type silica and being released therefrom is short, and separation efficiency is high. In addition, by increasing the size of the silica core particles, it is possible to increase the particle diameter of the core-shell-type silica while reducing the thickness of the shell, meaning that flow resistance can be reduced without causing the separation efficiency to decrease.

A variety of core-shell-type silicas have been developed in the past (for example, see Patent Literature 1 and Non-Patent Literatures 1 and 2). A core-shell-type silica having high sphericity and a narrow particle size distribution and a method for manufacturing the same have also been developed (see Patent Literature 2).

### PRIOR ART DOCUMENT

### Patent Literature

Patent Literature 1: Japanese Patent Application Publication No. 2012-171833
Patent Literature 2: WO 2007/122930 pamphlet

### Non-Patent Literature

Non-Patent Literature 1: J. S. Beck et al., J. Am. Chem. Soc., 114, 10834 (1992)
Non-Patent Literature 2: Journal of Colloid and Interface Science, 361 (2011) 16-24

### SUMMARY OF INVENTION

### Technical Problem

The present invention addresses the problem of providing a method for manufacturing monodispersed core-shell-type silica particles having an increased peak pore diameter.

### Solution to Problem

As a result of diligent research carried out in order to solve this problem, the inventors of the present invention found that when core-shell-type porous silica particles are manufactured, use of non-porous silica particles as a core particles contributes to achieve monodispersion and use of a hydrophobic part-containing additive contributes to an increase in peak pore diameter, and thereby completed the present invention. The present invention is as described below.

<1> A method for manufacturing core-shell-type porous silica particles, the method including:
   a preparation step for preparing an aqueous solution containing non-porous silica particles, a cationic surfactant, a basic catalyst, a hydrophobic part-containing additive, and an alcohol;
   a shell precursor formation step for adding a silica source to the aqueous solution to form a shell precursor on surfaces of the non-porous silica particles; and
   a shell formation step for removing the hydrophobic part-containing additive and the cationic surfactant from the shell precursor to form a porous shell.
<2> The manufacturing method according to <1>, wherein the cationic surfactant is a hexadecyltrimethylammonium halide and/or an octadecyltrimethylammonium halide.
<3> The manufacturing method according to <1> or <2>, wherein the basic catalyst is ammonia.
<4> The manufacturing method according to any one of <1> to <3>, wherein the hydrophobic part-containing additive is 1,3,5-trimethylbenzene and/or cyclohexane.
<5> The manufacturing method according to any one of <1> to <4>, wherein the alcohol is ethanol.
<6> The manufacturing method according to any one of <1> to <5>, wherein the silica source is tetraethoxysilane.

### Advantageous Effects of Invention

According to the present invention, it is possible to provide a method for manufacturing monodispersed core-shell-type silica particles having an increased peak pore diameter.

### BRIEF DESCRIPTION OF DRAWINGS

FIG. 1A is a scanning transmission electron microscope (STEM) image of particles obtained in Reference Example 1 (a photograph in lieu of a drawing), and FIG. 1B is a scanning transmission electron microscope (STEM) image of particles obtained in Reference Example 2 (a photograph in lieu of a drawing).
FIG. 2A is a scanning transmission electron microscope (STEM) image of particles obtained in Example 1 (a photograph in lieu of a drawing), and FIG. 2B is a scanning transmission electron microscope (STEM) image of particles obtained in Comparative Example 1 (a photograph in lieu of a drawing).
FIG. 3 is a scanning transmission electron microscope (STEM) image of particles obtained in Example 2 (a photograph in lieu of a drawing).
FIG. 4 is a scanning transmission electron microscope (STEM) image of particles obtained in Example 3 (a photograph in lieu of a drawing).
FIG. 5 is a scanning transmission electron microscope (STEM) image of particles obtained in Example 4 (a photograph in lieu of a drawing).
FIG. 6 is a scanning transmission electron microscope (STEM) image of particles obtained in Example 5 (a photograph in lieu of a drawing).
FIG. 7 is a scanning transmission electron microscope (STEM) image of particles obtained in Example 6 (a photograph in lieu of a drawing).
FIG. 8 is a scanning transmission electron microscope (STEM) image of particles obtained in Example 7 (a photograph in lieu of a drawing).
FIG. 9 is a scanning transmission electron microscope (STEM) image of particles obtained in Comparative Example 2 (a photograph in lieu of a drawing).

### DESCRIPTION OF EMBODIMENTS

The present invention is a method for manufacturing core-shell-type porous silica particles, the method including: a preparation step for preparing an aqueous solution containing non-porous silica particles, a cationic surfactant, a basic catalyst, a hydrophobic part-containing additive, and an alcohol; a shell precursor formation step for adding a silica source to the aqueous solution to form a shell precursor on the surfaces of the non-porous silica particles; and a shell formation step for removing the hydrophobic part-containing additive and the cationic surfactant from the shell precursor to form a porous shell. The manufacturing method of the present invention includes a preparation step, a shell precursor formation step and a shell formation step, but may include other steps.

### <1. Preparation step>

The present invention includes a preparation step for preparing an aqueous solution containing non-porous silica particles, a cationic surfactant, a basic catalyst, a hydrophobic part-containing additive, and an alcohol. Other steps may be included.

### (Non-porous silica particles)

In this step, non-porous silica particles can be used as core particles of the core-shell-type porous silica particles manufactured using the manufacturing method of the present invention, and is substantially non-porous.

Substantially non-porous means that the core particles have a specific surface area of 50 m²/g or less, as measured using a nitrogen gas adsorption method. By setting the specific surface area of the core particles to 50 m²/g or less, in cases where the core-shell-type silica is used as a filler for liquid chromatography, substances to be separated adsorbed on the shell are not adsorbed by the core particles thereby increasing the separation efficiency. The specific surface area of the core particles is preferably 30 m²/g or less.

In this step, the non-porous silica particles may be a commercially available product, but may also be manufactured using, for example, the manufacturing method disclosed in the examples in the present specification.

In this step, the volume average particle diameter (Dᵥ) of the non-porous silica particles is generally 20 nm or more, preferably 30 nm or more, and more preferably 40 nm or more, from the perspective of ensuring dispersion stability of the non-porous silica particles in the reaction solution. Meanwhile, the volume average particle diameter (Dᵥ) of the non-porous silica particles is generally 1.5 µm or less, preferably 1.0 µm or less, more preferably 500 nm or less, and further preferably 300 nm or less, from the perspective of reducing the volume fraction of the non-porous silica particles in the core-shell-type porous silica particles.

Moreover, the volume average particle diameter (Dᵥ) can be determined by, for example, randomly selecting 200 or more particles from a particle image taken by an electron microscope and measuring the particle diameter.

In this step, the particle size dispersion degree (Cᵥ) of the non-porous silica particles is generally 15% or less, preferably 10% or less, and more preferably 8% or less, from the perspective of increasing the filling rate of core-shell-type porous silica particles that is finally manufactured.

Moreover, the particle size dispersion degree (Cᵥ) can also be determined by, for example, randomly selecting 200 or more particles from a particle image taken by an electron microscope and measuring the particle diameter.

By making the volume fraction of the non-porous silica particles prepared in this step relative to the reaction volume in the precursor shell formation step greater than a certain value, almost all of the silica source is consumed in shell formation, thereby suppressing formation of new porous silica particles. That is, because fine porous silica particles may be formed if the volume fraction of the non-porous silica particles relative to the reaction volume is too low, this volume fraction is generally 0.001 vol.% or more, preferably 0.010 vol.% or more, and more preferably 0.020 vol.% or more. Meanwhile, this volume fraction is generally 50 vol.% or less, preferably 20 vol.% or less, and more preferably 10 vol.% or less, from the perspective of reducing the frequency of collision between non-porous silica particles in the solution.

### (Method for manufacturing non-porous silica particles)

In this step, the method for manufacturing the non-porous silica particles is not particularly limited. For example, one example thereof is the manufacturing method disclosed in "Preparation Example 1 of core particles (non-porous silica particles)" in the examples in the present specification. In this manufacturing method in the example, a small sealed glass reactor having an internal volume of 110 ml is used, and stirring is carried out with a magnetic stirrer so that the reaction solution is homogeneous.

### (Cationic surfactant)

In this step, the cationic surfactant acts as a template for forming pores in the shell. The type and concentration of the cationic surfactant greatly affect the shape of pores in the shell. In this step, it is possible to use one type of cationic surfactant or a combination of two or more types thereof, but use of one type is preferred in order to form a shell having uniform pores.

In this step, the type of cationic surfactant is not particularly limited as long as the desired effect of the present invention is achieved, however alkylammonium halides and alkylamines are preferred.

Examples of alkylammonium halides include tetradecyltrimethylammonium halides, hexadecyltrimethylammonium halides, octadecyltrimethylammonium halides, eicosyltrimethylammonium halides, docosyltrimethylammonium halides, and the like. Of these, hexadecyltrimethylammonium halides and octadecyltrimethylammonium halides are preferred, and hexadecyltrimethylammonium bromide (cetyltrimethylammonium bromide; CTAB) and octadecyltrimethylammonium bromide (octadecyltrimethylammonium bromide) are more preferred, from the perspective of the diameter of the pores to be formed.

Examples of alkylamines include straight chain alkylamines having 8 to 20 carbon atoms, and dodecylamine is preferred from the perspective of ease of formation of uniform pores.

The overall concentration of the cationic surfactant(s) is generally 0.1 mM or more, preferably 1 mM or more, and more preferably 5 mM or more, in order for the effect as a template to be sufficiently exhibited. Meanwhile, in order to form uniform pores, the overall concentration of the cationic surfactant(s) is generally 1000 mM or less, preferably 500 mM or less, and more preferably 100 mM or less.

### (Basic catalyst)

In this step, the basic catalyst is not particularly limited, and an inorganic or organic basic catalyst able to be used to produce core-shell-type porous silica particles can be used as appropriate. It is possible to use one basic catalyst or a combination of two or more types thereof. Of these, ammonium-based and amine-based basic catalysts, which are nitrogen-based basic catalysts, are preferred, and highly reactive ammonia is more preferred. Furthermore, in cases where ammonia is used, use of aqueous ammonia is preferred from the perspective of safety.

The overall concentration of the basic catalyst(s) is generally 0.01 mM or more, preferably 0.05 mM or more, and more preferably 0.1 mM or more, from the perspective of reaction acceleration. Meanwhile, the overall concentration of the basic catalyst(s) is generally 10 M or less, preferably 5 M or less, and more preferably 3 M or less, from the perspective of reaction control.

### (Hydrophobic part-containing additive)

In this step, the hydrophobic part-containing additive has the effect of increasing the pore diameter. The type of hydrophobic part-containing additive is not particularly limited as long as the desired effect of the present invention is achieved, but examples thereof include substances having low solubility in water, such as benzene, toluene, cyclohexane (CyH), cyclohexanol, dodecanol, decane, chlorododecane, 1,3,5-trimethylbenzene (TMB), 1,3,5-triisopropylbenzene, and the like. Of these, cyclohexane (CyH), 1,3,5-trimethylbenzene (TMB) and 1,3,5-triisopropylbenzene are preferred, and cyclohexane (CyH) and 1,3,5-trimethylbenzene (TMB) are more preferred, from the perspective of degree of non-polarity. It is possible to use one hydrophobic part-containing additive or a combination of two or more types thereof.

The overall concentration of the hydrophobic part-containing additive(s) is generally 1 mM or more, preferably 5 mM or more, and more preferably 10 mM or more, from the perspective of exhibiting the effect of increasing the pore diameter. Meanwhile, the overall concentration of the hydrophobic part-containing additive(s) is generally 1000 mM or less, preferably 750 mM or less, and more preferably 500 mM or less, from the perspective of maintaining the integrated structure formed by the cationic surfactant.

In this step, the quantity of the hydrophobic part-containing additive relative to the cationic surfactant is such that the weight ratio of the hydrophobic part-containing additive to the cationic surfactant is generally 0.1 or more and is, in order of increasing preference, 0.5 or more, 1.0 or more, 3.0 or more and 5.0 or more, from the perspective of enlarging hydrophobic environment spaces formed by the cationic surfactant. Meanwhile, the weight ratio of the hydrophobic part-containing additive to the cationic surfactant is generally 15.0 or less, preferably 12.0 or less, and more preferably 10.0 or less, from the perspective of avoiding collapse of the shell in the shell formation step.

### (Alcohols)

In this step, the alcohol is at least one type selected from the group consisting of methanol, ethanol, isopropanol, n-propanol, ethylene glycol and glycerin, and from the perspective of good solubility of the silica source, is preferably methanol or ethanol, and more preferably ethanol.

The alcohol concentration is generally 0.1 M or more, preferably 0.5 M or more, and more preferably 1 M or more. Meanwhile, the alcohol concentration is generally 18 M or less, preferably 17 M or less, and more preferably 15 M or less.

In cases where tetraethoxysilane, for example, is used as a silica source for forming porous silica, by setting the alcohol concentration to 0.1 M or more, it is possible to control hydrolysis of the alkoxysilane to an appropriate rate and it is possible to form porous silica uniformly on the surfaces of silica core particles. In addition, if the alcohol concentration exceeds 18 M, efficient manufacture of porous silica is impaired.

### (Others)

In this step, an aqueous solution can be prepared by adding components other than those mentioned above as long as the desired effect of the present invention is achieved.

### <2. Shell precursor formation step>

The present invention includes a shell precursor formation step for adding a silica source to the aqueous solution prepared in the preparation step to form a shell precursor on the surfaces of the non-porous silica particles. Other steps may be included.

### (Silica source)

In this step, the silica source is selected from those capable of forming a silicon oxide by a reaction, and is preferably an alkoxysilane, sodium silicate or a mixture of them, and more preferably an alkoxysilane, from the perspective of reaction efficiency and handleability. Among alkoxysilanes, trimethylmethoxysilane, trimethylethoxysilane, tetraethoxysilane (tetraethylorthosilicate; TEOS) and tetramethoxysilane are preferred, and tetraethoxysilane (tetraethylorthosilicate; TEOS) is particularly preferred, from the perspective of versatility.

In this step, a solution of the silica source is added to the aqueous solution prepared in the preparation step mentioned above. The solution of the silica source is preferably a solution in an alcohol listed in the "(Alcohols)" section in the preparation step mentioned above, however it is not particularly limited as long as a shell precursor can be formed on the surfaces of the non-porous silica particles.

In this step, the concentration of the silica source is generally 0.1 mM or more, preferably 0.5 mM or more, and more preferably 1 mM or more. Meanwhile, the concentration of the silica source is generally 200 mM or less, preferably 150 mM or less, and more preferably 100 mM or less.

By setting the concentration of the silica source to 0.1 mM or more, the core particle can be sufficiently covered with the shell. Meanwhile, by setting the concentration of the silica source to 200 mM or less, almost all of the silica source is consumed in formation of the shell, thereby suppressing generation of new silica particles.

### (Shell precursor formation)

By reacting the aqueous solution prepared in the preparation step mentioned above with the added silica source, silica is precipitated on the surfaces of the non-porous core particles at an almost uniform thickness. At that time, micelles of the cationic surfactant are incorporated in the silica and therefore a shell precursor containing silica and the cationic surfactant is formed. In addition, the hydrophobic part-containing additive dissolves in a hydrophobic environment formed by the cationic surfactant and the hydrophobic field size is enlarged by this dissolution, and as a result, a porous shell precursor having a large pore diameter is formed.

### (pH)

The pH at shell precursor formation is generally 8 or more, preferably 8.5 or more, and more preferably 9 or more. Meanwhile, the pH at shell precursor formation is generally 13 or less, preferably 12.5 or less, and more preferably 12 or less.

A pH of less than 8 is not desirable because the rate of hydrolysis of the silica source is slow. Meanwhile, a pH of greater than 13 is not desirable because it is not possible to control the rate of hydrolysis of the silica source.

Adding a basic compound and adding a basic surfactant such as an alkylamine as a surfactant are examples of methods for adjusting the pH.

### (Temperature)

The temperature at shell precursor formation is generally 5°C or higher, preferably 10°C or higher, and more preferably 15°C or higher, from the perspective of reaction rate. Meanwhile, the temperature at shell precursor formation is generally 80°C or lower, preferably 70°C or lower, and more preferably 60°C or lower, from the perspectives of reaction control and solvent boiling point.

### (Time)

The time taken for shell precursor formation is generally 30 minutes or more, preferably 1 hour or more, and more preferably 2 hours or more, from the perspective of uniformity of the shell precursor that is formed. Meanwhile, the time taken for shell precursor formation is generally 48 hours or less, preferably 36 hours or less, and more preferably 24 hours or less, from the perspective of efficient shell precursor formation.

### <3. Shell formation step>

The present invention includes a shell formation step for removing the hydrophobic part-containing additive and the cationic surfactant from the shell precursor to form a porous shell. Other steps may be included.

As a method for removing the hydrophobic part-containing additive and the cationic surfactant from the shell precursor formed in the shell precursor formation step mentioned above, it is possible to use a method of placing the shell precursor in a solvent in which the hydrophobic part-containing additive and the cationic surfactant dissolve so as to dissolve the hydrophobic part-containing additive and the cationic surfactant in the solvent, a method of firing the shell precursor formed in the shell precursor formation step mentioned above so as to burn off the hydrophobic part-containing additive and the cationic surfactant contained in the shell precursor, or the like. Any of these methods are preferred, and it is more preferable to use both of these methods in combination in order to be able to completely remove the hydrophobic part-containing additive and the cationic surfactant.

In the latter firing method, the firing temperature is generally 300°C or higher, preferably 350°C or higher, and more preferably 400°C or higher, from the perspective of removing the hydrophobic part-containing additive and the cationic surfactant sufficiently. Meanwhile, the firing temperature is generally 1000°C or lower, preferably 900°C or lower, and more preferably 800°C or lower, from the perspective of maintaining a porous structure.

In addition, the firing time is generally 30 minutes or more, preferably 1 hour or more, and more preferably 2 hours or more, from the perspective of removing the hydrophobic part-containing additive and the cationic surfactant sufficiently. Meanwhile, the firing time is generally 24 hours or less, preferably 12 hours or less, and more preferably 6 hours or less, from the perspective of removing them efficiently.

In this step, it is possible to include, for example, a washing step for washing the shell precursor formed in the shell precursor formation step and a drying step for drying the shell precursor, in addition to the steps mentioned above. A preferred order of these steps is formation of the shell precursor, the washing step, the drying step, and then removal of the hydrophobic part-containing additive and the cationic surfactant.

### (Washing step)

In the washing step, washing can be carried out by, for example, precipitating the shell precursor by centrifugal separation and replacing the solution. The solution used for the washing is preferably water, and especially deionized water (ultrapure water), and washing is generally carried out 3 times.

### (Drying step)

In the drying step, drying can be carried out by, for example, leaving the shell precursor to stand overnight under vacuum at room temperature, after centrifugal removal of a reaction solution.

### <4. Core-shell-type porous silica particles>

Core-shell-type porous silica particles are manufactured by the manufacturing method of the present invention.

The volume average particle diameter (Dᵥ) of the core-shell-type porous silica particles manufactured by the manufacturing method of the present invention is generally 0.03 µm or more, preferably 0.15 µm or more, and more preferably 0.75 µm or more, from the perspective of operability, such as column pressure loss when the core-shell-type porous silica particles are used as a chromatography filler. Meanwhile, the volume average particle diameter (Dᵥ) is generally 50 µm or less, preferably 20 µm or less, and more preferably 10 µm or less, from the perspective of column performance, such as column efficiency, when the core-shell-type porous silica particles are used as a chromatography filler. The volume average particle diameter (Dᵥ) can be determined by, for example, randomly selecting 200 or more particles from a particle image taken by an electron microscope and measuring the particle diameter.

The particle size dispersion degree (Cᵥ) of the core-shell-type porous silica particles manufactured by the manufacturing method of the present invention is generally 5.0% or less, preferably 4.0% or less, and more preferably 3.5% or less, from the perspective of good filling properties in a chromatography column. The particle size dispersion degree (Cᵥ) can be determined by, for example, randomly selecting 200 or more particles from a particle image taken by an electron microscope and measuring the particle diameter.

The shell thickness (Tₛ) of the core-shell-type porous silica particles manufactured by the manufacturing method of the present invention is generally 10 nm or more and is, in order of increasing preference, 20 nm or more, 30 nm or more, 65 nm or more, 75 nm or more, 85 nm or more and 100 nm or more, from the perspective of high porosity. Meanwhile, the shell thickness (Tₛ) is generally 500 nm or less and is, in order of increasing preference, 400 nm or less, 300 nm or less, 200 nm or less, 150 nm or less and 120 nm or less, from the perspective of the mechanical strength of the particles. The shell thickness (Tₛ) can be determined by, for example, calculating the difference in volume average particle diameter (Dᵥ) between the generated particles and the core particles.

The specific surface area (S_{BET}) of the core-shell-type porous silica particles manufactured by the manufacturing method of the present invention is generally 20 m²/g or more, preferably 30 m²/g or more, and more preferably 50 m²/g or more, from the perspective of ensuring sufficient permeability of substances to be separated. Meanwhile, the specific surface area (S_{BET}) is generally 3000 m²/g or less, preferably 2000 m²/g or less, and more preferably 1500 m²/g or less, from the perspective of operability, such as the elution time of substances to be separated when the core-shell-type porous silica particles are used as a chromatography filler. The specific surface area (S_{BET}) can be determined by, for example, calculating a nitrogen adsorption/desorption isotherm by BET analysis.

The pore volume (Vₚ) of the core-shell-type porous silica particles manufactured by the manufacturing method of the present invention is generally 0.05 cm³/g or more, preferably 0.075 cm³/g or more, and more preferably 0.1 cm³/g or more, from the perspective of ensuring sufficient permeability of substances to be separated. Meanwhile, the pore volume (Vₚ) is generally 5 cm³/g or less, preferably 3 cm³/g or less, and more preferably 2 cm³/g or less, from the perspective of operability, such as the elution time of substances to be separated when the core-shell-type porous silica particles are used as a chromatography filler. The pore volume (Vₚ) can be determined by, for example, calculating the adsorbed amount when the ratio of vapor pressure to saturated vapor pressure is 0.99.

The peak pore diameter (Dₚ) of the core-shell-type porous silica particles manufactured by the manufacturing method of the present invention is generally 3 nm or more, preferably 5 nm or more, more preferably 7 nm or more, and further preferably 8 nm or more, from the perspective of functioning as an adsorption layer when the core-shell-type porous silica particles are actually used as a liquid chromatography filler or the like. Meanwhile, the peak pore diameter (Dₚ) is generally 100 nm or less, preferably 50 nm or less, and more preferably 30 nm or less, from the perspective of being able to be used for separation of large molecules such as proteins. The peak pore diameter (Dₚ) can be determined by BJH analysis of a nitrogen adsorption/desorption isotherm.

### EXAMPLE

The present invention will now be explained in greater detail through the specific examples, however the present invention is not limited to these examples.

<1. Case in which porous silica particles are manufactured without using core particles (non-porous silica particles)>

First, Reference Example 1 and Reference Example 2 describe examples in which porous silica particles are manufactured without using core particles (non-porous silica particles). Reference Example 1 is a case in which porous silica particles are manufactured using 1,3,5-trimethylbenzene (TMB) as a hydrophobic part-containing additive, and Reference Example 2 is a case in which porous silica particles are manufactured without using TMB.

### [Reference Example 1]

### (Raw materials for porous silica)

Cationic surfactant: hexadecyltrimethylammonium halide (cetyltrimethylammonium bromide; CTAB)
Basic catalyst: ammonia
Hydrophobic part-containing additive: 1,3,5-trimethylbenzene (TMB)
Alcohol: ethanol
Silica source: tetraethoxysilane (tetraethylorthosilicate; TEOS)

### (Manufacturing method)

Particles were synthesized by adding an ethanol solution (2) of TEOS, which is a silica source, to a deionized water-ethanol solution (1) obtained by dissolving CTAB, which is a cationic surfactant, and ammonia, which is a basic catalyst. TMB was added to the solution (1) 30 minutes before the TEOS was added so that TMB/CTAB = 3.0 (weight basis). The reaction was carried out at 80°C for 5 hours. The generated particles were subjected to centrifugation, vacuum dried overnight, and then fired for 4 hours at 550°C so as to remove TMB and CTAB to obtain particles.

Moreover, the reagent concentrations were 50 mM for CTAB, 100 mM for TEOS and 10 mM for ammonia, and the ethanol/deionized water ratio was 0.25 (v/v).

### (Evaluation methods)

A scanning transmission electron microscope (STEM) was used to observe the generated particles, and each of the volume average particle diameter (Dᵥ) and particle size dispersion degree (Cᵥ) were determined by randomly selecting 200 or more particles. The peak pore diameter (Dₚ) was calculated by BJH analysis of a nitrogen adsorption/desorption isotherm.

### [Reference Example 2]

Reference Example 2 is a case in which porous silica particles were manufactured in the same way as in Reference Example 1, except that TMB was not used.

### (Results)

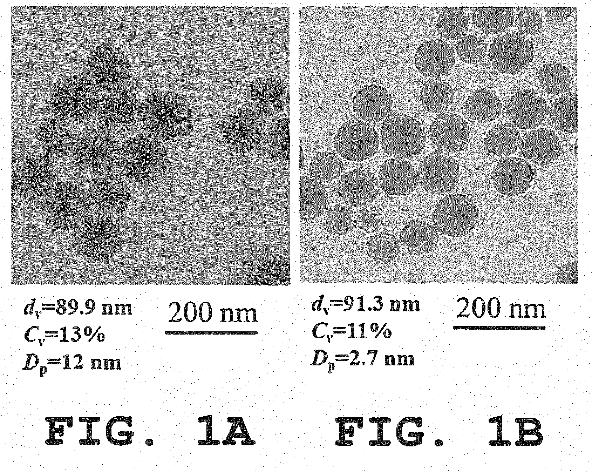

FIG. 1A is a STEM image of particles obtained in Reference Example 1, and FIG. 1B is a STEM image of particles obtained in Reference Example 2. Results obtained by evaluating the particles using the evaluation methods mentioned above are shown in Table 1 below.

### [Table 1]

**Table 1**

| | Reference Example 1 | Reference Example 2 |
|---|---|---|
| Drawing | FIG. 1A | FIG. 1B |
| Core particle | - | - |
| Hydrophobic part-containing additive (TMB) | + | - |
| Volume average particle diameter (*D*ᵥ) | 89.9 nm | 91.3 nm |
| Particle size dispersion degree (Cᵥ) | 13% | 11% |
| Peak pore diameter (*D*ₚ) | 12 nm | 2.7 nm |

In view of the results shown above, the particles manufactured in Reference Example 2 are polydispersed and have a small peak pore diameter (Dₚ).

Meanwhile, the particles manufactured in Reference Example 1 were polydispersed, and the structure of some of the particles was collapsed, however the peak pore diameter (Dₚ) was significantly greater than in Reference Example 2. It is thought that the structure of some of the particles was collapsed because the mechanical strength of the particles was decreased due to an increase in the peak pore diameter.

### <2. Case in which core-shell-type porous silica particles are manufactured using core particles (non-porous silica particles)>

Next, Examples 1 to 7 and Comparative Examples 1 and 2 describe examples in which core-shell-type porous silica particles are manufactured using core particles (non-porous silica particles).

Example 1 is a case in which core-shell-type porous silica particles were manufactured using the core particles (non-porous silica particles) prepared in Preparation Example 1 described below and also using 1,3,5-trimethylbenzene (TMB) as a hydrophobic part-containing additive, and Comparative Example 1 is a case in which the core particles prepared in Preparation Example 1 below were used, but TMB was not used.

Examples 2 to 7 are cases in which core-shell-type porous silica particles were manufactured using the core particles (non-porous silica particles) prepared in Preparation Example 2 described below and also using 1,3,5-trimethylbenzene (TMB) or cyclohexane (CyH) as a hydrophobic part-containing additive, and are cases in which the concentration of core particles, the TEOS concentration/CTAB concentration and the quantity of the added hydrophobic part-containing additive were changed as shown in Table 2.

Comparative Example 2 is a case in which core-shell-type porous silica particles were manufactured using the core particles (non-porous silica particles) prepared in Preparation Example 2 described below, but without using a hydrophobic part-containing additive.

### [Preparation Example 1 of core particles (non-porous silica particles)]

### (Raw materials)

Basic catalyst: methylamine
Organic solvent: acetonitrile/ethanol (percentage of acetonitrile: 40 wt.%)
Silica source: tetraethoxysilane (tetraethylorthosilicate; TEOS)

### (Manufacturing method)

Core particles (non-porous silica particles) were synthesized by adding an ethanol solution (4) of TEOS, which is a silica source, to a deionized water-acetonitrile/ethanol solution (percentage of acetonitrile: 40 wt.%) (3) obtained by dissolving methylamine, which is a basic catalyst. The reaction was carried out at 35°C for 18 hours. The generated particles were subjected 3 times to centrifugal washing with deionized water, and then re-dispersed in deionized water.

Moreover, the reagent concentrations were 200 mM for TEOS, 3 M for deionized water and 50 mM for methylamine.

### [Preparation Example 2 of core particles (non-porous silica particles)]

Preparation Example 2 was the same as Preparation Example 1, except that spherical silica (Sciqas, produced by Sakai Chemical Industry Co., Ltd.) was used as the silica source of raw material.

### [Example 1]

### (Raw materials for core-shell-type porous silica particles)

Core particles: non-porous silica particles prepared in Preparation Example 1
Cationic surfactant: hexadecyltrimethylammonium halide (cetyltrimethylammonium bromide; CTAB)
Basic catalyst: ammonia
Hydrophobic part-containing additive: 1,3,5-trimethylbenzene (TMB)
Alcohol: ethanol
Silica source: tetraethoxysilane (tetraethylorthosilicate; TEOS)

### (Manufacturing method)

A solution (5) was obtained by adding and dispersing the core particles prepared in Preparation Example 1 (Dᵥ = 94 nm, Cᵥ = 11.3%) in a deionized water-ethanol solution obtained by dissolving CTAB, which is a cationic surfactant, and ammonia, which is a basic catalyst. Particles were synthesized by adding an ethanol solution (6) of TEOS, which is a silica source, to the solution (5). TMB was added to the solution (5) 30 minutes before the TEOS was added so that TMB/CTAB = 3.0 (weight basis). The reaction was carried out at 35°C for 18 hours. The generated particles were subjected to centrifugation, vacuum dried overnight, and then fired for 4 hours at 550°C so as to remove the TMB and CTAB to obtain particles.

Moreover, the reagent concentrations were 10 mM for CTAB, 30 mM for TEOS and 10 mM for ammonia, the ethanol/deionized water ratio was 0.42 (v/v), and the content of core particles (non-porous silica particles) was 0.026 vol.%.

### [Examples 2 to 7]

Core-shell-type porous silica particles were manufactured in the manner described below using the raw materials shown in Table 2.

A solution (7) was obtained by adding and dispersing the core particles prepared in Preparation Example 2 (Dᵥ = 1060 nm, Cᵥ = 2.4%) in a deionized water-ethanol solution obtained by dissolving CTAB, which is a cationic surfactant, and ammonia, which is a basic catalyst. Particles were synthesized by adding an ethanol solution (8) of TEOS, which is a silica source, to the solution (7). The hydrophobic part-containing additive (TMB or CyH) was added to the solution (7) 30 minutes before the TEOS was added so that (TMB or CyH)/CTAB = 3.0 or 7.5 (weight basis). The reaction was carried out at 35°C for 18 hours. The generated particles were subjected to centrifugation, vacuum dried overnight, and then fired for 4 hours at 550°C so as to remove the hydrophobic part-containing additive (TMB or CyH) and CTAB to obtain particles.

Moreover, the reagent concentrations were 10 or 20 mM for CTAB, 30 or 60 mM for TEOS and 10 mM for ammonia, the ethanol/deionized water ratio was 0.42 (v/v), and the content of core particles (non-porous silica particles) was 0.3 or 1.5 vol.%.

### (Evaluation methods)

Evaluations were carried out in the same way as in Reference Example 1. A scanning transmission electron microscope (STEM) was used to observe the generated particles, and each of the volume average particle diameter (Dᵥ) and particle size dispersion degree (Cᵥ) were determined by randomly selecting 200 or more particles. The peak pore diameter (Dₚ) was calculated by BJH analysis of a nitrogen adsorption/desorption isotherm. The shell thickness (Tₛ) was calculated from the difference in Dᵥ between the generated particles and the core particles. The specific surface area (S_{BET}) was calculated by BET analysis of a nitrogen adsorption/desorption isotherm. The pore volume (Vₚ) was calculated from the adsorbed amount when the ratio of vapor pressure to saturated vapor pressure is 0.99.

### [Comparative Example 1]

Comparative Example 1 is a case in which core-shell-type porous silica particles were manufactured in the same way as in Example 1, except that a hydrophobic part-containing additive was not used.

### [Comparative Example 2]

Comparative Example 2 is a case in which core-shell-type porous silica particles were manufactured in the same way as in Examples 4 to 7, except that a hydrophobic part-containing additive was not used.

### [Table 2]

**Table 2**

| | Core particle preparation | Core particle concentration (vol.%) | TEOS concentration (mM)/CTAB concentration (mM) | Hydrophobic part-containing additive | Hydrophobic part-containing additive/CTAB (weight basis) |
|---|---|---|---|---|---|
| Example 1 | Preparation Example 1 | 0.026 | 30/10 | TMB | 3.0 |
| Example 2 | Preparation Example 2 | 0.3 | 30/10 | TMB | 3.0 |
| Example 3 | Preparation Example 2 | 1.5 | 30/10 | TMB | 3.0 |
| Example 4 | Preparation Example 2 | 1.5 | 60/20 | TMB | 3.0 |
| Example 5 | Preparation Example 2 | 1.5 | 60/20 | TMB | 7.5 |
| Example 6 | Preparation Example 2 | 1.5 | 60/20 | CyH | 3.0 |
| Example 7 | Preparation Example 2 | 1.5 | 60/20 | CyH | 7.5 |
| Comparative Example 1 | Preparation Example 1 | 0.026 | 30/10 | - | 0 |
| Comparative Example 2 | Preparation Example 2 | 1.5 | 60/20 | - | 0 |

### (Results)

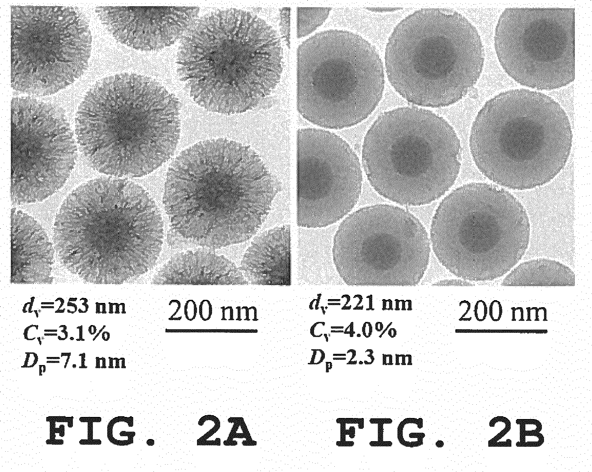

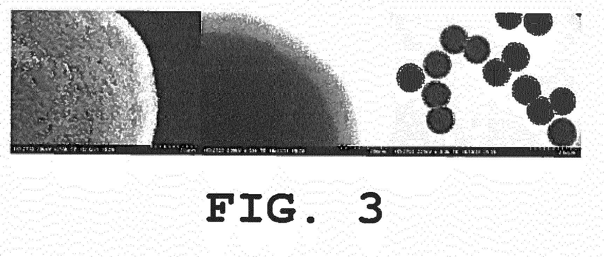

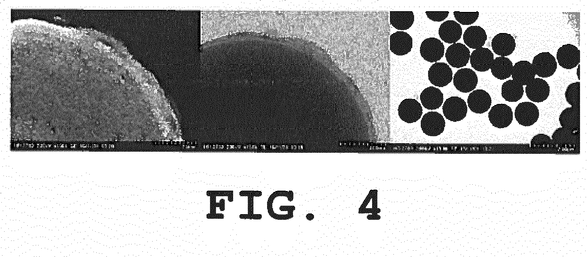

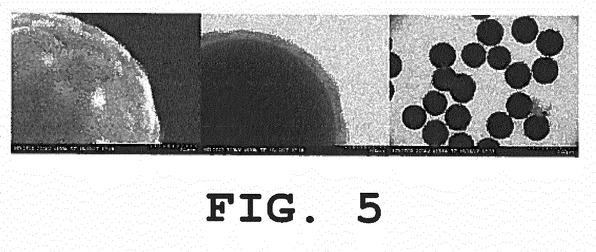

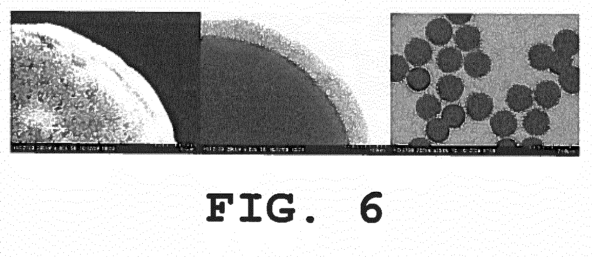

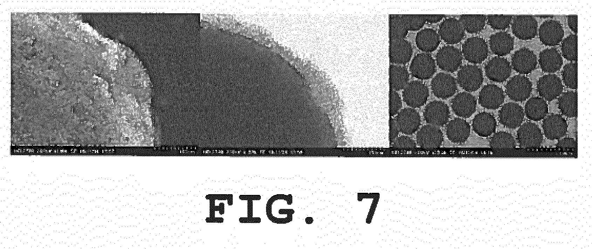

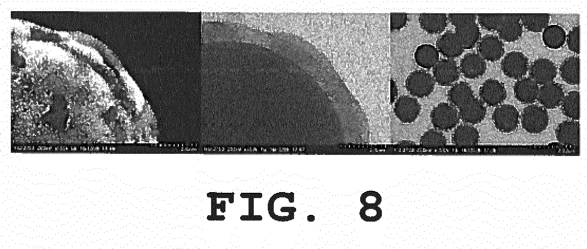

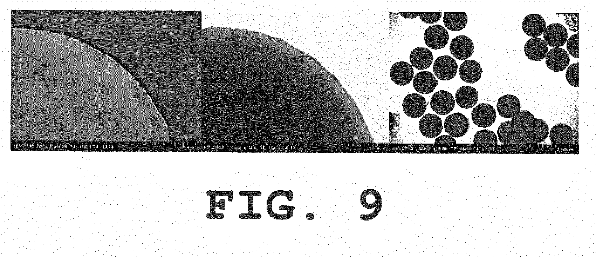

STEM images of the particles obtained in the examples and comparative examples are shown in FIGs. 2 to 9. In addition, results obtained by evaluating the particles using the evaluation methods mentioned above are shown in Table 3 below.

### [Table 3]

**Table 3**

| | Manufactured core-shell-type porous silica particles | | | | | | |
|---|---|---|---|---|---|---|---|
| | particle diameter Dᵥ (nm) | Particle size dispersion degree Cᵥ (%) | Shell thickness Tₛ (nm) | Specific surface area S_{BET} (m²/g) | Pore volume Vₚ (cm³)/g | Peak pore diameter Dₚ (nm) | FIG. No. |
| Example 1 | 253 | 3.1 | 79 | 966 | 1.54 | 7.1 | FIG. 2A |
| Example 2 | 1318 | 2.4 | 127 | 225 | 0.263 | 3.1 | FIG. 3 |
| Example 3 | 1143 | 2.7 | 39 | 57 | 0.111 | 3.2 | FIG. 4 |
| Example 4 | 1204 | 2.8 | 70 | 105 | 0.189 | 4.8 | FIG. 5 |
| Example 5 Example 6 | 1243 | 2.82 | 90 | 94.2 | 0.167 | 7 | FIG. 6 |
| | 1202 | 2.69 | 69 | 109 | 0,193 | 3.1 | FIG. 7 |
| Example 7 | 1282 | 2.71 | 109 | 114 | 0.245 | 8.7 | FIG. 8 |
| Comparative Example 1 | 221 | 4 | 63 | 842 | 0.979 | 2.3 | FIG. 2B |
| Comparative Example 2 | 1159 | 2.2 | 47 | 125 | 0.113 | 2.6 | FIG. 9 |

In view of the results shown above, the particles manufactured in Comparative Examples 1 and 2 were monodispersed, but the peak pore diameter (Dₚ) was low.

Meanwhile, the particles manufactured in Examples 1 to 7 were also monodispersed. This is thought to be because the core particles prepared in Preparation Example 1 or Preparation Example 2 were well covered with the shell and the standard deviation of particle diameter was not greatly changed before and after growth, and therefore the shell was formed while maintaining the monodispersion property of the core particles. In addition, the peak pore diameter (Dₚ) was greater or much greater than that in Comparative Examples 1 and 2. In the same way as in Reference Example 1, some particles whose structure had collapsed were observed, but the proportion of such particles was far lower than in Reference Example 1, and was extremely low.

### INDUSTRIAL APPLICABILITY

The manufacturing method according to the present invention can be used as a method for manufacturing core-shell-type porous silica particles able to be used in, for example, drug delivery systems (DDS) and fillers for liquid chromatography columns.

## Claims

1. A method for manufacturing core-shell-type porous silica particles, the method comprising:
a preparation step for preparing an aqueous solution containing non-porous silica particles, a cationic surfactant, a basic catalyst, a hydrophobic part-containing additive, and an alcohol;
a shell precursor formation step for adding a silica source to the aqueous solution to form a shell precursor on surfaces of the non-porous silica particles; and
a shell formation step for removing the hydrophobic part-containing additive and the cationic surfactant from the shell precursor to form a porous shell.

2. The manufacturing method according to claim 1, wherein the cationic surfactant is a hexadecyltrimethylammonium halide and/or an octadecyltrimethylammonium halide.

3. The manufacturing method according to claim 1 or 2, wherein the basic catalyst is ammonia.

4. The manufacturing method according to any one of claims 1 to 3, wherein the hydrophobic part-containing additive is 1,3,5-trimethylbenzene and/or cyclohexane.

5. The manufacturing method according to any one of claims 1 to 4, wherein the alcohol is ethanol.

6. The manufacturing method according to any one of claims 1 to 5, wherein the silica source is tetraethoxysilane.
